# EUROPEAN PATENT SPECIFICATION

(11) **EP 4 159 604 B1**
(45) Date of publication and mention of the grant of the patent: **10.01.2024**
(21) Application number: 22176707.2
(22) Date of filing: 01.06.2022
(51) Int. Cl.: B62J 9/12, B62J 9/22, B62J 25/04

(54) **STRADDLED VEHICLE**
GRÄTSCHSITZFAHRZEUG
VÉHICULE À ENFOURCHER

(30) Priority: 30.09.2021 JP 2021161702
(43) Date of publication of application: 05.04.2023
(73) Proprietor: Yamaha Hatsudoki Kabushiki Kaisha, Iwata-shi, Shizuoka 438-8501 (JP)
(72) Inventor: Tsai, Cheng-Ting, 320 Taoyuan City (TW); Chen, Yu-Wei, 320 Taoyuan City (TW); Peng, Zheng-Zhi, 320 Taoyuan City (TW)
(74) Representative: Grünecker Patent- und Rechtsanwälte PartG mbB

(56) References cited:
- EP-A1- 2 647 558
- EP-A1- 3 476 707
- EP-A1- 3 521 148
- CN-B- 102 464 051
- DE-A1- 3 206 854
- FR-A1- 2 699 055
- IT-A1- RM20 110 326
- JP-U- S5 698 673
- JP-U- S6 158 179
- JP-U- S6 332 087
- TW-A- 200 633 897
- US-A1- 2020 130 771

## Description

The present invention relates to a straddled vehicle according to the preamble of independent claim 1. Such a straddled vehicle can be taken from the prior art document EP 3 521 148 A1. Document JP S61 58179 U shows a straddled vehicle comprising a foot board and a storage box being a separate component from the foot board, the storage box being disposed on the upper surface of the foot board, the straddled vehicle is further comprising a fixing portion fixing a bottom surface of the storage box to the foot board, wherein the bottom surface of the storage box is fixed to the upper surface of the foot board by tightening the fixing portion over the storage box. Document JP S56 98673 U shows a straddled vehicle comprising a foot board and a storage box being a separate component from the foot board, the storage box being disposed on the upper surface of the foot board, the straddled vehicle is further comprising a fixing portion fixing a bottom surface of the storage box to the foot board, wherein the bottom surface of the storage box is fixed to the upper surface of the fixing portion, which in turn is fixed to the upper surface of the foot board.

Some straddled vehicles are equipped with a battery and travel by rotating a motor by electric power from the battery. In such a straddled vehicle, since the battery is mounted on the lower portion of the seat, it is difficult to secure a sufficient storage capacity.

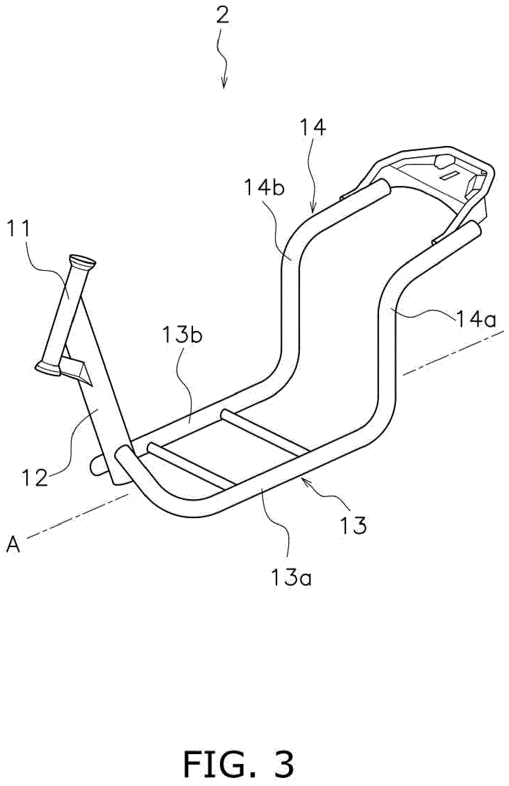

On the other hand, a configuration in which a storage is provided in the center of the footboard is disclosed (for example, see FIG. 3 of TW I254684 B). In the configuration disclosed in TW I254684 B, a pair of frames are disposed above the pair of lower frames, and a cover member is disposed so as to cover the pair of frames. The cover member is formed in a concave shape between the pair of frames, and this concave portion is used as a storage portion.

For a straddled vehicle traveling with electric power as described above, it is conceivable to use the storage portion as disclosed in TW I254684 B in order to secure a storage capacity.

However, in the configuration of TW I254684 B, since the storage portion is only supported by a pair of frames disposed on the outer side in the left-right direction, it is difficult to secure the strength to receive the load, and there is a restriction on increasing the storage capacity.

An object of the present invention is to provide a straddled vehicle capable of increasing the storage capacity. According to the present invention said object is solved by a straddled vehicle having the features of independent claim 1. Preferred embodiments are laid down in the dependent claims.

A straddled vehicle according to one aspect of the present teaching is a straddled vehicle configured to travel by electric power from a battery, and includes a head pipe, a down frame, a lower frame, a seat frame, a seat, a foot board and a storage box. The down frame extends downward from the head pipe. The lower frame extends rearward from the down frame. The seat frame extends rearward and upward from the lower frame. The seat is disposed behind the head pipe and is supported by the seat frame. The foot board is disposed in front of and below the seat. The foot board is disposed above the lower frame. The foot board includes an upper surface continuous in a left-right direction. The storage box is a separate component from the foot board and is disposed on the upper surface of the foot board.

In the straddled vehicle according to this aspect, the storage box separate from the foot board is disposed on the upper surface of the foot board. The foot board is strong enough for a rider to put his/her foot on it, and the storage box is supported from below by the foot board with such strength, so the storage box can be enlarged to increase the storage capacity. Further, since the storage box is a box type and is provided as a separate component from the foot board, it is possible to secure the strength of the storage box itself and increase the storage capacity.

The storage box may contain a box body including an opening on an upper surface and a lid portion configured to open and close the opening. The box body may include a body side protrusion portion that is disposed along an edge of the opening and projects towards a lid portion side. The lid portion may include a lid-side protrusion portion disposed outside the body side protrusion portion and along the edge of the opening when the lid portion closes the opening. In this case, when the opening is closed by the lid portion, the lid side protrusion portion is disposed on the outside of the body side protrusion portion, so that the waterproofness can be improved.

The box body may be divided into an upper portion including the opening and a lower portion disposed below the upper portion. A joint portion between the upper portion and the lower portion may be formed on a side surface of the box body. In this case, since the joint portion is provided on the side surface, it is difficult for water from the outside to permeate, and the waterproofness can be improved.

A front end of the lid portion may be rotatable in an up-down direction about an axis disposed behind the opening and along a left-right direction. In this case, the storage box can be opened and closed by holding the front end of the lid portion.

The straddled vehicle may further include a rear cover that covers the seat frame and is disposed below the seat, and a side cover that covers a side of the storage box. The side cover may be supported by the rear cover and the storage box. In this case, since it is not necessary to connect the side cover to the foot board, the components become smaller and the ease of assembly is improved. Since the side cover is provided as a separate component, the degree of freedom in design is improved. Since the side cover covers the side of the storage box, the waterproofness is improved.

The storage box may include a box body containing an opening on the upper surface and a lid portion configured to open and close the opening. The straddled vehicle may further include an upper cover that covers a periphery of the lid portion of the storage box from above. In this case, since the upper cover covers the storage box from above, the waterproofness is improved. Since the upper cover is provided as a separate component from the storage box and the foot board, the degree of freedom in design is improved.

The straddled vehicle may further include a side cover that covers a side of the storage box. On an outside of the opening in the left-right direction, an end on an opening side of the side cover is covered by the upper cover and is disposed closer to the opening than an end on an opposite side to the opening of the upper cover. In this case, the storage box is covered with the side cover and the upper cover from above and from the side, so that the waterproofness is improved. Since the upper cover and the side cover overlap, it becomes difficult for water droplets to enter the inside of the covers, and the waterproofness is improved.

The straddled vehicle further includes a fixing portion to fix a bottom surface of the storage box to the foot board. In this case, the storage box can be fixed on the foot board.

### ADVANTAGEOUS EFFECTS

According to the present invention, the storage capacity can be increased in a straddled vehicle.

### BRIEF DESCRIPTION OF THE DRAWINGS

FIG. 1 is a side view of a straddled vehicle according to an embodiment.
FIG. 2 is a plan view of the straddled vehicle.
FIG. 3 is a perspective view of a body frame.
FIG. 4 is a perspective view of a seat box as seen from above.
FIG. 5 is an exploded perspective view of a foot board and a rear cover.
FIG. 6 is a perspective view showing a state in which the rear cover is attached to the foot board.
FIG. 7 is a perspective view showing the vicinity of a storage box of the straddled vehicle.
FIG. 8 is a cross-sectional view taken along the arrow between B and B'.
FIG. 9A is a perspective view showing a state in which the storage box is disposed on the foot board and the rear cover.
FIG. 9B is a cross-sectional perspective view taken along the arrow between C and C' in Fig. 7.
FIG. 10 is an external view showing the storage box.
FIG. 11 is an exploded view of the storage box.
FIG. 12 is a plan view showing the vicinity of the storage box of the straddled vehicle.
FIG. 13 is a cross-sectional view taken along the arrow between D and D' in FIG. 12.
FIG. 14(a) is an enlarged view of a portion E of FIG. 8. FIG. 14 (b) is an enlarged view of a portion F of FIG. 8.
FIG. 15 is a view for explaining the assembly of the storage box.
FIG. 16 (a) to FIG. 16 (c) are schematic side views for explaining the rotation of a lid portion with respect to the storage box.
FIG. 17A is a perspective view for explaining the rotation of the lid portion with respect to the storage box.
FIG. 17B is a perspective view for explaining the rotation of the lid portion with respect to the storage box.
FIG. 17C is a perspective view for explaining the rotation of the lid portion with respect to the storage box.
FIG. 18 is a perspective view showing a state in which side covers are removed from the storage box shown in FIG. 9.
FIG. 19 is a perspective view showing a state in which the side covers are attached the storage box shown in FIG. 9.
FIG. 20 is a perspective view showing a state in which a upper cover is removed from the storage box and the side covers shown in FIG. 19.
FIG. 21 is a perspective view showing a state in which the upper cover is attached to the storage box and the side covers shown in FIG. 19.

### DESCRIPTION OF EMBODIMENTS

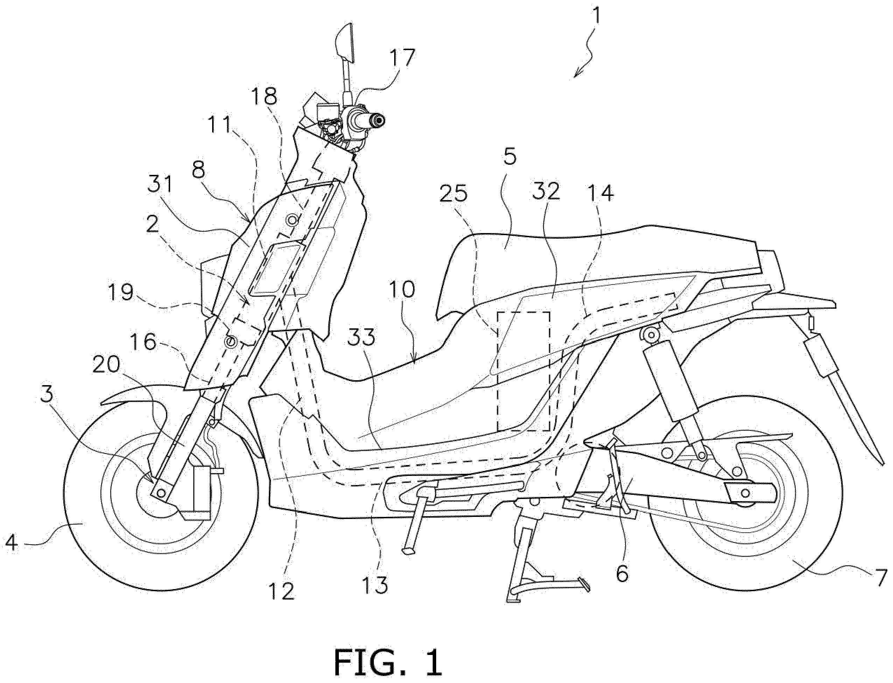

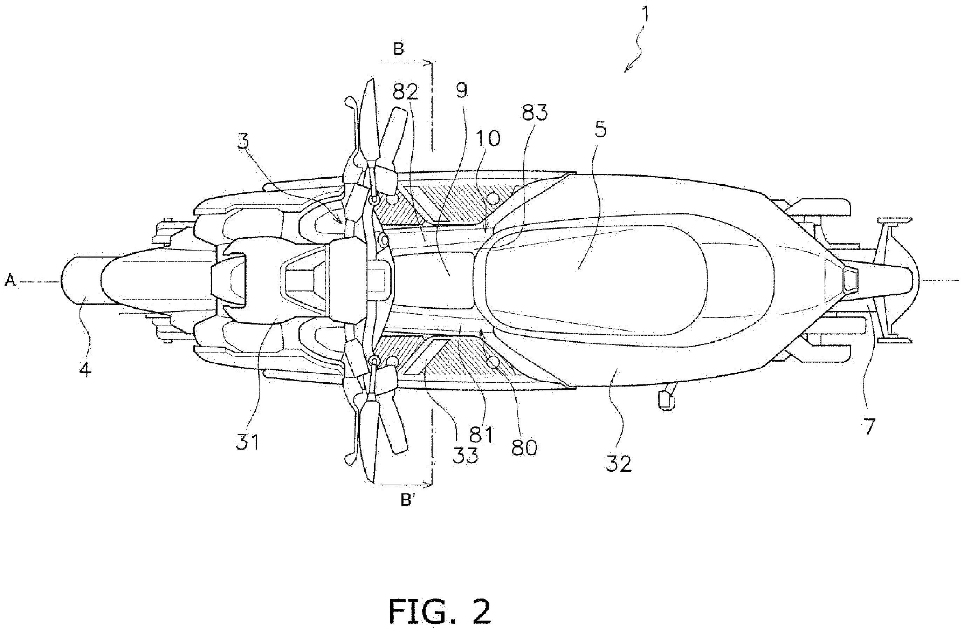

Hereinafter, a straddled vehicle 1 according to the embodiment will be described with reference to the drawings. FIG. 1 is a side view of the straddled vehicle 1. FIG. 2 is a plan view of the straddled vehicle 1. The straddled vehicle 1 includes a vehicle body frame 2, a steering device 3, a front wheel 4, a seat 5, a power unit 6, a rear wheel 7, a body cover 8, a storage box 9, and a box cover 10. In the following description, the vehicle front-rear direction, the vehicle left-right direction and the vehicle up-down direction are defined as the directions as seen in a rider seated on the seat 5.

FIG. 3 is a perspective view of the vehicle body frame 2. The vehicle body frame 2 includes a head pipe 11, a down frame 12, a lower frame 13, and a seat frame 14.

The head pipe 11 is disposed at a center of the vehicle in a vehicle width direction (vehicle left-right direction). The head pipe 11 extends forward and downward. The down frame 12 extends downward from the head pipe 11.

The lower frame 13 extends rearward from a lower portion of the down frame 12. The lower frame 13 includes a first lower frame 13a and a second lower frame 13b. The first lower frame 13a is disposed on a left side with respect to a center line A of a vehicle in a vehicle plan view. The first lower frame 13a extends rearward from the lower portion of the down frame 12. The first lower frame 13a does not intersect the center line A of the vehicle in the vehicle plan view.

The second lower frame 13b is disposed on a right side with respect to the center line A of the vehicle in the vehicle plan view. The second lower frame 13b extends rearward from the lower portion of the down frame 12. The second lower frame 13b does not intersect the center line A of the vehicle in the vehicle plan view.

The seat frame 14 extends rearwardly and upwardly from a rear portion of the lower frame 13. The seat frame 14 includes a first seat frame 14a and a second seat frame 14b. The first seat frame 14a extends rearwardly and upwardly from a rear portion of the first lower frame 13a. The second seat frame 14b extends rearwardly and upwardly from a rear portion of the second lower frame 13b.

As shown in FIG. 1, the steering device 3 is rotatably supported by the head pipe 11. The steering device 3 rotatably supports the front wheel 4. The steering device 3 includes a front fork 16 and a handle member 17. The front fork 16 is rotatably supported by the head pipe 11. The front wheel 4 is rotatably supported by the front fork 16. The handle member 17 can be operated by a rider to rotate the front wheel 4. The handle member 17 extends in the vehicle width direction.

The front fork 16 includes a steering shaft 18, a bracket 19, a left suspension 20, and a right suspension (not shown). The steering shaft 18 is inserted into the head pipe 11. The bracket 19 is connected to the steering shaft 18 and the left and right suspensions 20. The front wheel 4 is rotatably supported by the left and right suspensions 20.

The seat 5 is disposed behind the head pipe 11. The seat 5 is disposed above the seat frame 14. The seat 5 is supported by the seat frame 14 via a stay (not shown) or a seat box 21 described later. A rear end of the seat 5 is rotatable upward with the width direction of a front end as a rotation axis. The power unit 6 is disposed below the seat 5. The power unit 6 includes an electric motor. The rear wheel 7 is rotatably supported by the power unit 6.

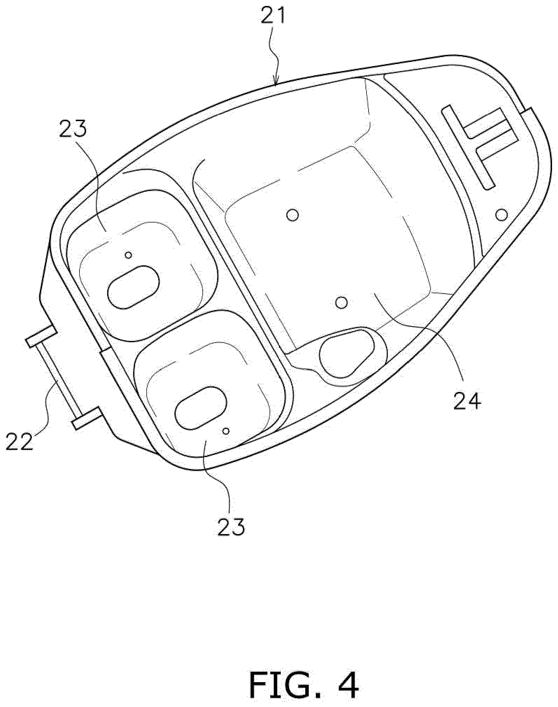

The straddled vehicle 1 includes a seat box 21. FIG. 4 is a perspective view showing the seat box 21 below the seat 5. The seat box 21 is disposed below the seat 5. The seat box 21 is disposed between the first seat frame 14a and the second seat frame 14b. The rear end of the seat 5 is rotatable upward with an axis 22 at a front end of the seat box 21 as a center. The seat box 21 includes a battery arrangement portion 23 and a seat lower storage portion 24. The battery arrangement portion 23 is a space for disposing a battery that is a drive source of the power unit 6. For example, two battery arrangement portions 23 are provided. The two battery arrangement portions 23 are disposed in a front portion of the seat box 21. The two battery arrangement portions 23 are disposed side by side in the width direction. A battery 25 (see the dotted line in FIG. 1) for driving the power unit 6 is inserted and disposed in the battery arrangement portion 23. The seat lower storage portion 24 is a space for storing luggage and the like. The seat lower storage portion 24 is disposed behind the two battery arrangement portions 23.

As shown in FIG. 1, the vehicle body cover 8 includes a front cover 31, a rear cover 32, and a foot board 33. The front cover 31 is fixed to the vehicle body frame 2. The front cover 31 covers the periphery of the head pipe 11 and the periphery of the down frame 12.

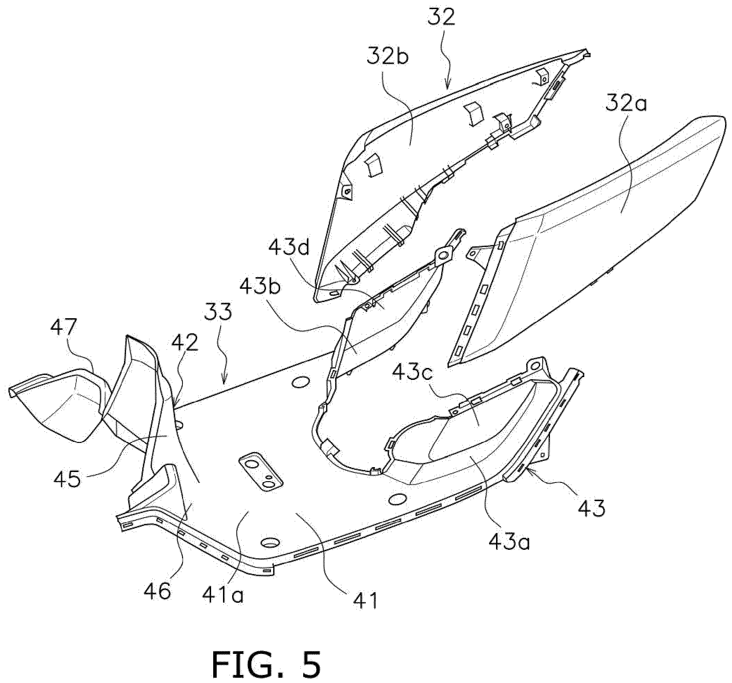

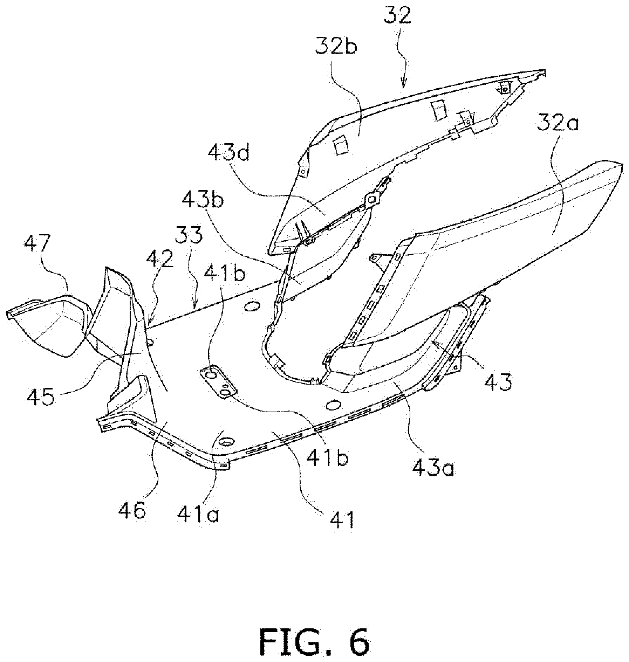

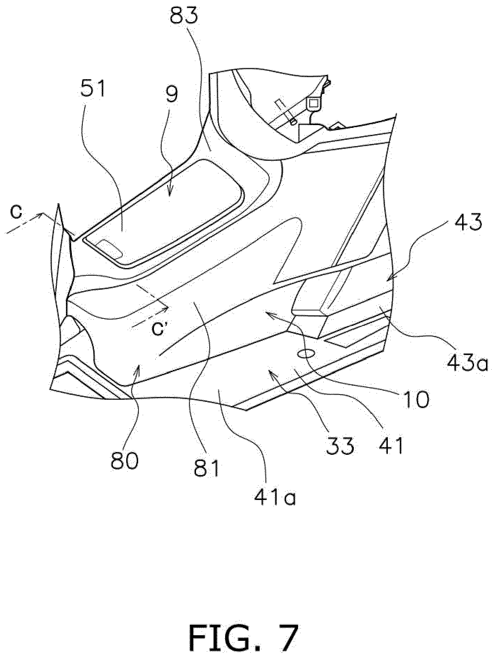

FIG. 5 is an exploded perspective view of the foot board 33 and the rear cover 32. FIG. 6 is a perspective view showing a state in which the rear cover 32 is attached to the foot board 33. FIG. 7 is a perspective view showing a vicinity of the storage box 9.

The rear cover 32 is disposed below the seat 5. As shown in FIG. 1, the rear cover 32 covers the seat frame 14 from the side. The rear cover 32 includes a first rear cover 32a and a second rear cover 32b, as shown in FIGS. 5 and 6.

The first rear cover 32a covers the first seat frame 14a (see FIG. 3) from the left side. The second rear cover 32b covers the second seat frame 14b (see FIG. 3) from the right side.

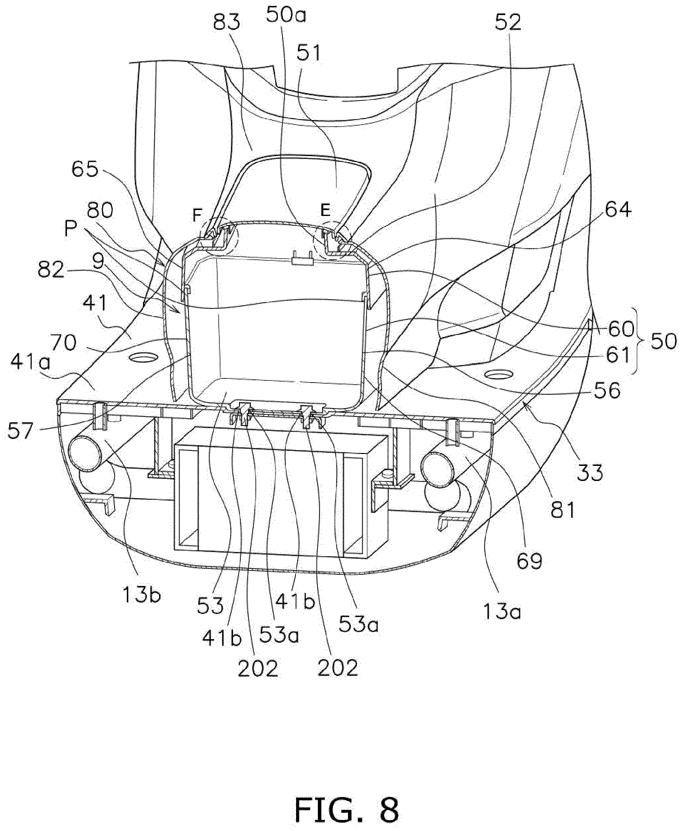

The foot board 33 forms a portion on which a rider of the straddled vehicle 1 puts his/her foot. The foot board 33 is disposed between the front cover 31 and the rear cover 32. The foot board 33 is disposed in front of and below the seat 5. FIG. 8 is a cross-sectional view taken along the arrow between B and B'. As shown in FIG. 8, the foot board 33 is disposed above the lower frame 13. The foot board 33 is disposed above the first lower frame 13a and the second lower frame 13b.

As shown in FIGS. 5 and 6, the foot board 33 includes a flat portion 41, a front inclined portion 42, and a rear portion 43. The flat portion 41 includes an upper surface 41a continuous in the left-right direction. The upper surface 41a includes a flat shape. The flat shape of the flat portion 41 means that the flat portion 41 is flat enough to allow a rider to put his / her foot on any portion of the flat portion 41. The upper surface 41a of the flat portion 41 may be formed with roughness, for example, to prevent slipping.

The front inclined portion 42 extends from a front end of the flat portion 41 toward a front upper side. The front inclined portion 42 includes a central portion 45, a first end portion 46, and a second end portion 47. The central portion 45 is a portion disposed at the center of the front inclined portion 42 in the width direction. The central portion 45 covers the rear of the lower part of the down frame 12. The first end portion 46 is a portion of the front inclined portion 42 on the left side of the central portion 45. The first end portion 46 includes a gentler slope than the central portion 45. The second end portion 47 is a portion of the front inclined portion 42 on the right side of the central portion 45. The second end portion 47 includes a gentler slope than the central portion 45. The rider's foot can be placed on the first end portion 46 and the second end portion 47.

The rear portion 43 extends rearward and upward from a rear end of the flat portion 41. The rear portion 43 includes a first rear portion 43a and a second rear portion 43b. The first rear portion 43a extends rearward and upward from a left portion of the rear end of the flat portion 41. The first rear portion 43a includes a first attachment portion 43c formed upward. As shown in FIGS. 5 and 6, a first rear cover 32a is attached to the first attachment portion 43c. An upper end portion of the first attachment portion 43c and a lower end portion of the first rear cover 32a are connected. The second rear portion 43b extends rearward and upward from a right portion of the rear end of the flat portion 41. A space is formed between the first rear portion 43a and the second rear portion 43b. In a plan view, the seat 5 and the seat box 21 are disposed at this space. The second rear portion 43b includes a second attachment portion 43d formed upward. As shown in FIGS. 5 and 6, the second rear cover 32b is attached to the second attachment portion 43d. An upper end portion of the second attachment portion 43d and the lower end portion of the second rear cover 32b are connected.

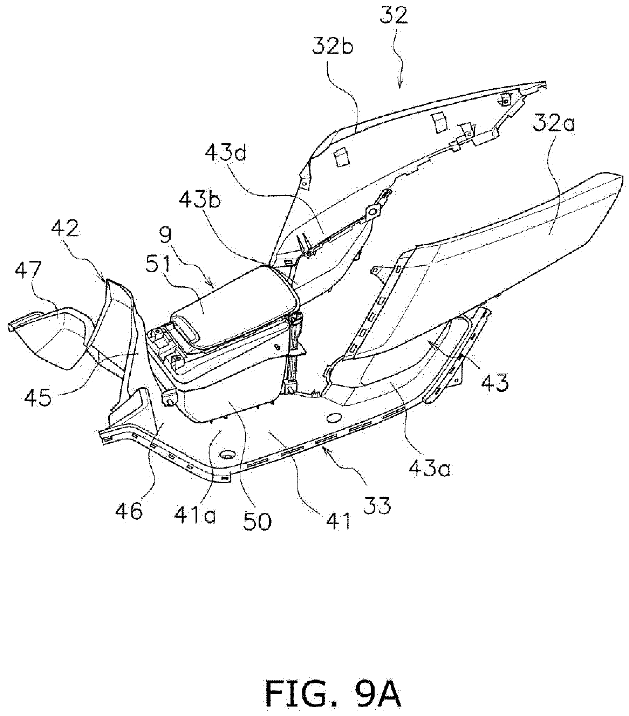

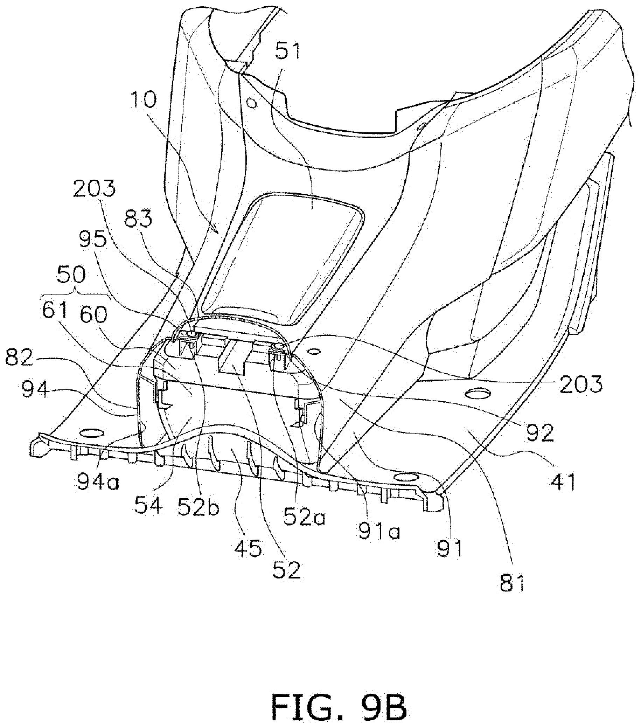

As shown in FIG. 8, the storage box 9 is disposed on the upper surface 41a of the foot board 33. FIG. 9A is a perspective view showing a state in which the storage box 9 is disposed on the foot board 33 and the rear cover 32 shown in FIG. 6. In FIG. 9A, the box cover 10 described later is not shown. FIG. 9B is a cross-sectional perspective view taken along the arrow between C and C' in Fig. 7.

As shown in FIGS. 9A and 9B, the storage box 9 is a separate component from the foot board 33. This "separate component" means that the storage box 9 and the foot board 33 are not connected by one member, but are formed as separate configurations. Each configuration of the storage box 9 and the foot board 33 may be formed of a plurality of members or may be formed of one member. The storage box 9 is detachable to the foot board 33.

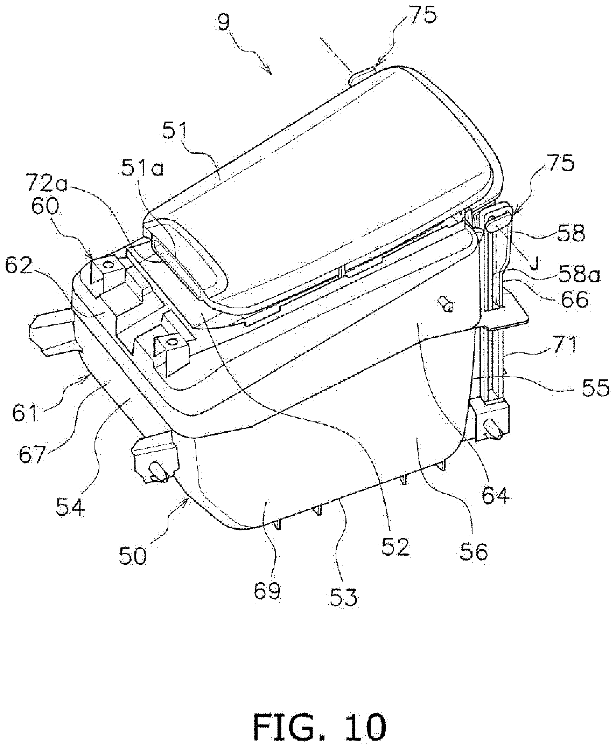

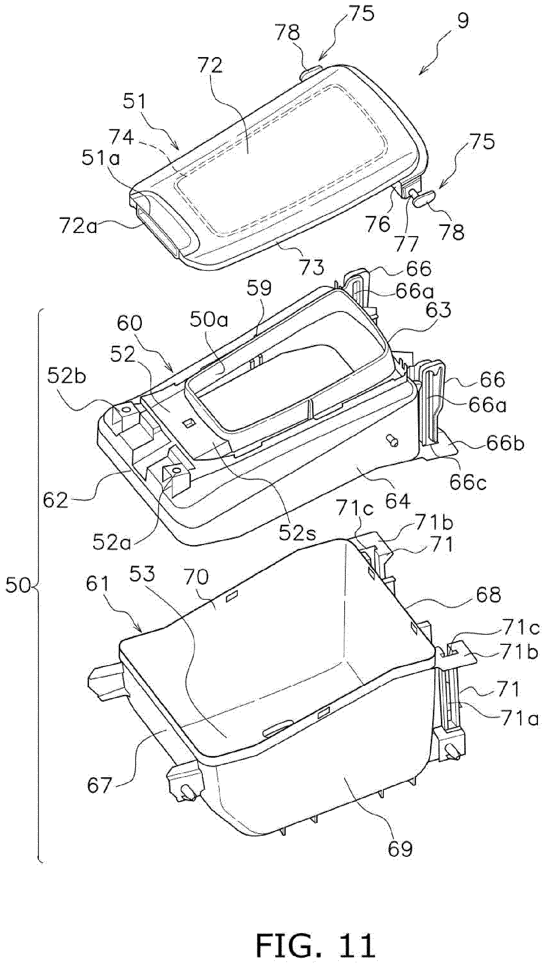

FIG. 10 is an external view showing the storage box 9. FIG. 11 is an exploded view of the storage box 9. The storage box 9 includes a box body 50 and a lid portion 51.

As shown in FIG. 11, the box body 50 includes an opening 50a on an upper surface. The lid portion 51 is configured to open and close the opening 50a. As shown in FIG. 10, the box body 50 includes a ceiling portion 52, a bottom surface portion 53, a front side surface portion 54, a rear side surface portion 55, a left side surface portion 56, a right side surface portion 57 (see FIG. 8), and a slit forming portion 58.

As shown in FIG. 11, an opening 50a is formed in the ceiling portion 52. The ceiling portion 52 includes a body side protrusion portion 59, and the body side protrusion portion 59 is disposed on an upper surface 52s of the ceiling portion 52. The body side protrusion portion 59 projects upward. The body side protrusion portion 59 is disposed along an edge of the opening 50a. The body side protrusion portion 59 is disposed over the entire circumference of the edge of the opening 50a. The ceiling portion 52 is inclined forward downward from the rear end to the front end.

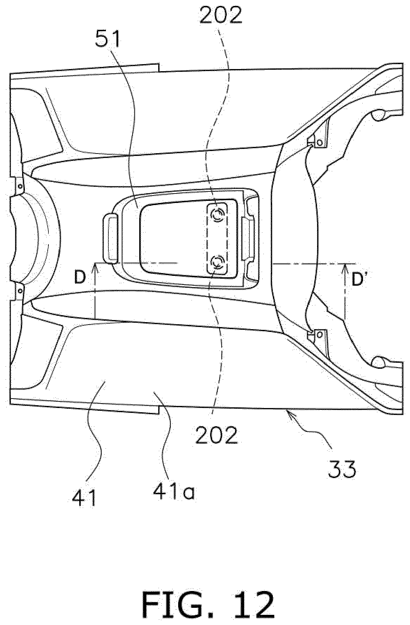

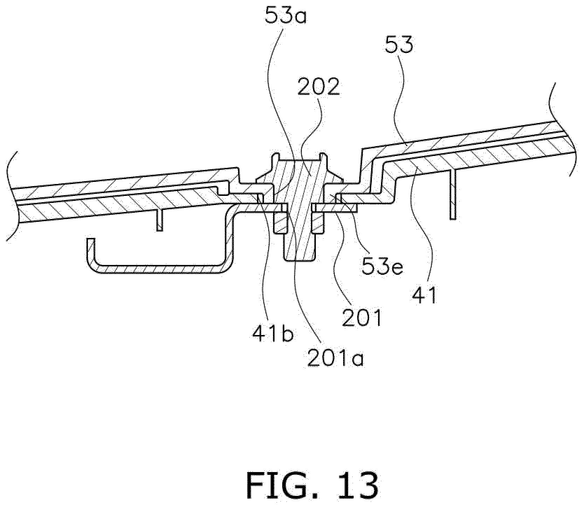

As shown in FIG. 8, the bottom surface portion 53 is disposed on the upper surface 41a of the flat portion 41 of the foot board 33. FIG. 12 is an enlarged plan view showing a vicinity of the storage box 9 of the straddled vehicle 1. FIG. 13 is a cross-sectional view taken along the arrow between D and D' in FIG. 12. As shown in FIG. 8, two through holes 53a are formed in the bottom surface portion 53 along the left-right direction. As shown in FIG. 13, an edge portion 53e of the through hole 53a is bent downward. As shown in FIG. 6, two through holes 41b are formed in the flat portion 41 of the foot board 33 along the left-right direction. As shown in FIG. 13, the edge portion 53e is inserted into each through hole 41b. Below the through hole 41b of the flat portion 41, a bracket 201 including a through hole 201a facing the through hole 41b is disposed. With the edge portion 53e inserted into the through hole 41b, the bolt 202 is inserted into the through hole 53a of the bottom surface portion 53 and the through hole 201a of the bracket 201. As a result, the storage box 9 is fixed to the upper surface 41a of the foot board 33. The bolt 202 corresponds to an example of a fixing portion.

As shown in FIG. 10, the front side surface portion 54 is disposed between a front end of the ceiling portion 52 and a front end of the bottom surface portion 53. As shown in FIG. 9B, in a state where the storage box 9 is disposed on the foot board 33, the front side surface portion 54 is disposed so as to face the central portion 45 of the front inclined portion 42.

As shown in FIG. 10, the rear side surface portion 55 is disposed between a rear end of the ceiling portion 52 and a rear end of the bottom surface portion 53. In a state where the storage box 9 is disposed on the foot board 33, the rear side surface portion 55 is disposed so as to face the seat 5 in a plan view.

As shown in FIGS. 10 and 8, the left side surface portion 56 is disposed between a left end of the ceiling portion 52 and a left end of the bottom surface portion 53. As shown in FIG. 8, the right side surface portion 57 is disposed between a right end of the ceiling portion 52 and a right end of the bottom surface portion 53.

The slit forming portion 58 is provided so that the lid portion 51 can rotate and slide with respect to the box body 50. The slit forming portion 58 is formed along the up-down direction at each of a left end and a right end of the rear side surface portion 55 (the slit forming portion 58 at the right end is not shown in FIG. 10). Each slit forming portion 58 is formed with a slit 58a that penetrates in the width direction and is formed along the up-down direction.

As shown in FIG. 11, the box body 50 is formed of two members. The box body 50 includes an upper portion 60 and a lower portion 61.

As shown in FIG. 11, the upper portion 60 includes the above-mentioned ceiling portion 52, a first front side surface portion 62, a first rear side surface portion 63, a first left side surface portion 64, a first right side surface portion 65 (as shown in FIG. 8) and the first slit forming portion 66. The first front side surface portion 62 is disposed downward from the front end of the ceiling portion 52. The first front side surface portion 62 is an upper portion of the front side surface portion 54 shown in FIG. 10. The first rear side surface portion 63 is disposed downward from the rear end of the ceiling portion 52. The first rear side surface portion 63 is an upper portion of the rear side surface portion 55. The first left side surface portion 64 is disposed downward from the left end of the ceiling portion 52. The first left side surface portion 64 is an upper portion of the left side surface portion 56. The first right side surface portion 65 is disposed downward from the right end of the ceiling portion 52. The first right side surface portion 65 is an upper portion of the right side surface portion 57. The first slit forming portion 66 is formed along the up-down direction at each of a left end and a right end of the first rear side surface portion 63. The first slit forming portion 66 is an upper portion of the slit forming portion 58. In the first slit forming portion 66, a first slit portion 66a, which is an upper portion of the slit 58a, is formed along the up-down direction. The first slit forming portion 66 includes a first connection flange portion 66b at a lower end thereof. The first connection flange portion 66b is connected to a second connection flange portion 71b at an upper end of the second slit forming portion 71, which will be described later. A first hole 66c through which the end portion 78, which will be described later, of the lid portion 51 is able to pass is formed in the first connection flange portion 66b.

As shown in FIG. 11, the lower portion 61 includes the above-mentioned bottom surface portion 53, a second front side surface portion 67, a second rear side surface portion 68, a second left side surface portion 69, a second right side surface portion 70 and a second slit forming portion 71. The second front side surface portion 67 is disposed upward from the front end of the bottom surface portion 53. The second front side surface portion 67 is a lower portion of the front side surface portion 54. The second rear side surface portion 68 is disposed upward from the rear end of the bottom surface portion 53. The second rear side surface portion 68 is a lower portion of the rear side surface portion 55. The second left side surface portion 69 is disposed upward from the left end of the bottom surface portion 53. The second left side surface portion 69 is a lower portion of the left side surface portion 56. The second right side surface portion 70 is disposed upward from the right end of the bottom surface portion 53. The second right side surface portion 70 is a lower portion of the right side surface portion 57.

The second slit forming portion 71 is disposed along the up-down direction at each of a left end and a right end of the second rear side surface portion 68. The second slit forming portion 71 is a lower portion of the slit forming portion 58. In the second slit forming portion 71, a second slit portion 71a, which is a lower portion of the slit 58a, is formed along the up-down direction. The second slit forming portion 71 includes the second connection flange portion 71b at the upper end thereof. The second connection flange portion 71b is connected to the first connection flange portion 66b at the lower end of the first slit forming portion 66. A second hole 71c through which the end portion 78, which will be described later, of the lid portion 51 is able to pass is formed in the second connection flange portion 71b.

A lower end portion of the first front side surface portion 62 and an upper end portion of the second front side surface portion 67 are joined, a lower end portion of the first rear side surface portion 63 and an upper end portion of the second rear side surface portion 68 are joined, a lower end portion of the first left side surface portion 64 and an upper end portion of the second left side surface portion 69 are joined, and a lower end portion of the first right side surface portion 65 and an upper end portion of the second right side surface portion 70 are joined. For example, a screw or an adhesive can be used for this joining. In this way, since the upper portion 60 and the lower portion 61 are joined at the joint portion P (see FIG. 8) on the side surface, it is possible to prevent water from seeping from the outside. Further, the first connection flange portion 66b of the first slit forming portion 66 and the second connection flange portion 71b of the second slit forming portion 71 are fastened with screws or the like.

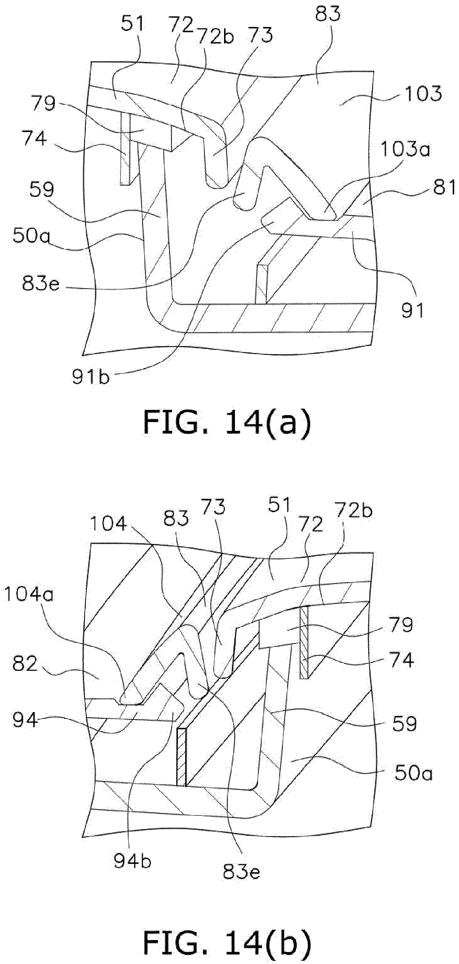

As shown in FIG. 11, the lid portion 51 includes a lid body 72, an outer protrusion portion 73, an inner protrusion portion 74, a shaft portion 75, and an elastic member 79 (see FIGS. 14(a) and 14(b)). The lid body 72 includes a size that covers the opening 50a. A recess 72a is formed at a front end 51a of the lid portion 51. The recess 72a is a portion on which a rider hooks his / her finger when opening the lid portion 51.

FIG. 14 (a) is an enlarged view of a portion E in FIG. 8. FIG. 14 (b) is an enlarged view of a portion F in FIG. 8. The outer protrusion portion 73 projects from a surface 72b of the lid body 72 facing the opening 50a in a state where the lid portion 51 closes the opening 50a. The outer protrusion portion 73 is disposed over the entire outer circumference of the lid body 72. The outer protrusion portion 73 is formed by bending an outer edge of the lid portion 51 downward. The outer protrusion portion 73 is disposed outside the body side protrusion portion 59 when the lid portion 51 closes the opening 50a. The outer protrusion portion 73 is disposed over the entire circumference of the body side protrusion portion 59. Thereby, it is possible to improve the waterproofness. The outer protrusion portion 73 corresponds to an example of a lid side protrusion portion.

The inner protrusion portion 74 is disposed inside the outer protrusion portion 73. The inner protrusion portion 74 protrudes from the surface 72b. The inner protrusion portion 74 is disposed inside the outer protrusion portion 73. The inner protrusion portion 74 is disposed over the entire circumference of the outer protrusion portion 73. The inner protrusion portion 74 is disposed inside the body side protrusion portion 59 when the lid portion 51 closes the opening 50a.

The elastic member 79 is disposed on the surface 72b of the lid body 72. The elastic member 79 is disposed between the inner protrusion portion 74 and the outer protrusion portion 73. In a state where the opening 50a is closed by the lid portion 51, the elastic member 79 comes into contact with a tip of the body side protrusion portion 59. The elastic member 79 softens the collision of the lid portion 51 with the box body 50 when the lid portion 51 is closed.

As shown in FIG. 11, the shaft portion 75 projects outward from each of a left end and a right end in the width direction of a rear end portion of the lid body 72. The shaft portion 75 is disposed on a rear side of the opening 50a of the box body 50. The shaft portion 75 disposed on the left side projects from the left end of the rear end portion of the lid body 72 toward the left. The shaft portion 75 disposed on the right side projects from the right end of the rear end portion of the lid body 72 toward the right. The shaft portion 75 includes an attachment base 76, a shaft 77, and an end portion 78. The attachment base 76 includes a substantially rectangular parallelepiped shape and is attached to the lid body 72. The shaft 77 is disposed so as to face outward from the attachment base 76. The end portion 78 is disposed at a tip of the shaft 77. The end portion 78 covers the shaft 77 in a side view and is formed larger than the shaft 77. The end portion 78 is formed elongated in the direction along the lid body 72.

The lid portion 51 is attached to the box body 50 by inserting each of the shafts 77 disposed on the left and right sides of the lid body 72 into each of the left and right slits 58a of the box body 50. The lid portion 51 rotates with respect to the box body 50 about the central axis J (see FIG. 10) of the shaft 77.

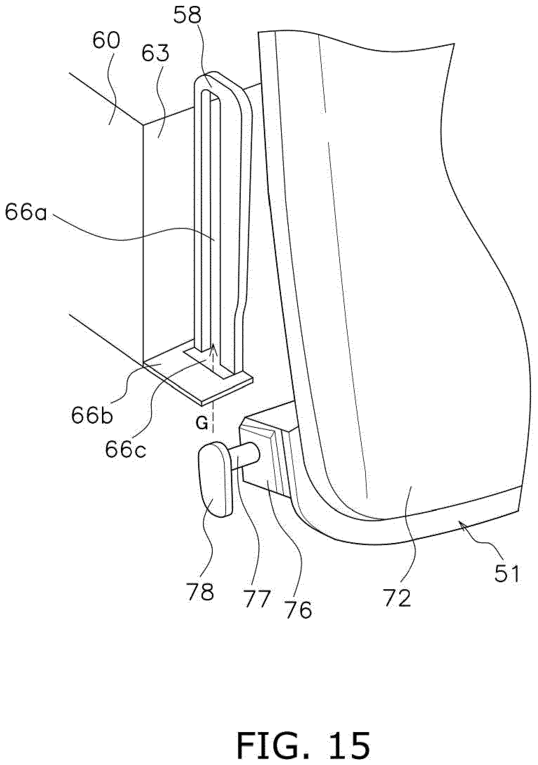

An example of assembling the storage box 9 will be described with reference to FIG. 15. FIG. 15 is a view schematically showing the attachment operation of the lid portion 51 to the upper portion 60. For example, as shown in FIG. 15, the lid portion 51 is disposed with respect to the upper portion 60 so that the longitudinal direction of the end portion 78 is along the slit 58a. Then, by moving the lid portion 51 with respect to the upper portion 60 along the arrow G direction, the end portion 78 passes through the first hole 66c of the first connection flange portion 66b, and the shaft 77 is inserted into the first slit portion 66a of the first slit forming portion 66. After that, the storage box 9 can be assembled by joining the lower portion 61 and the upper portion 60 to which the lid portion 51 is attached.

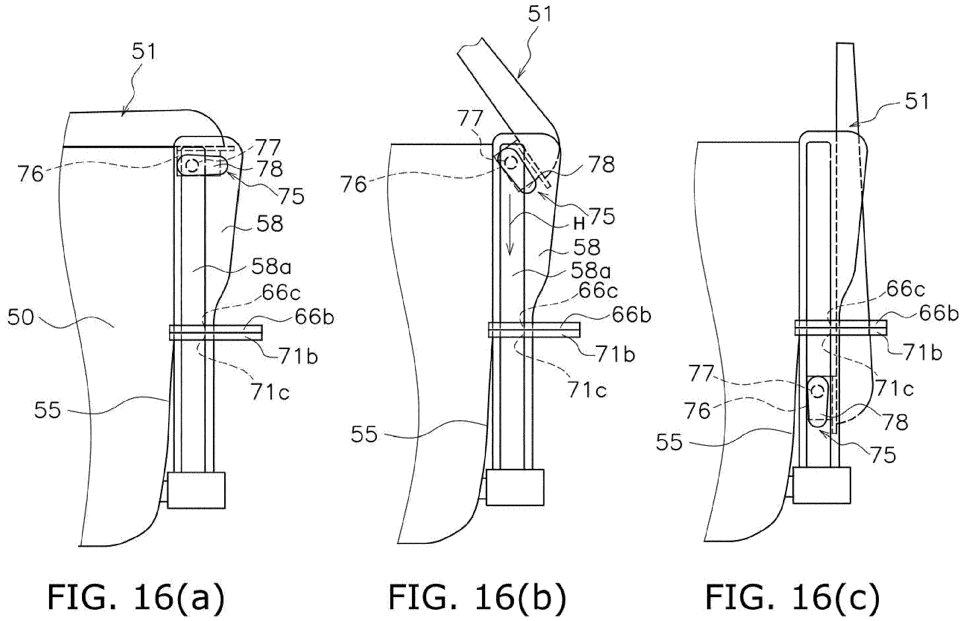

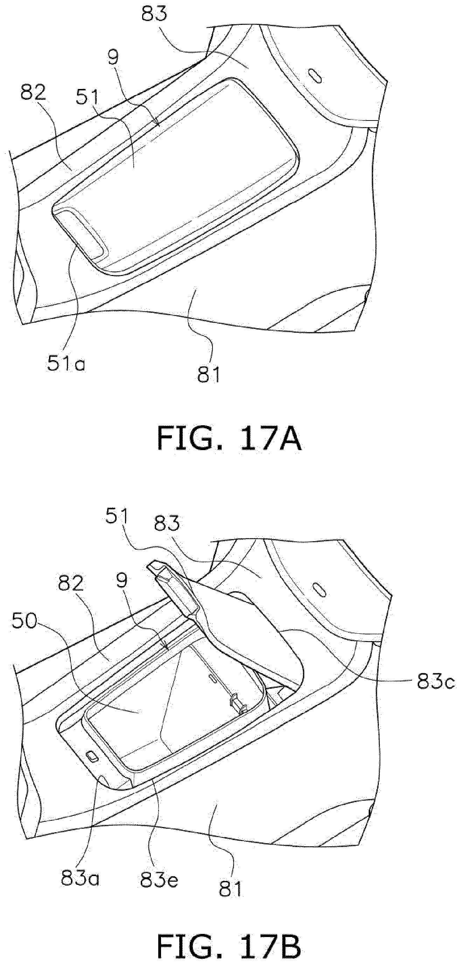

FIG. 16 (a) to FIG. 16 (c) are schematic side views for explaining the rotation of the lid portion 51 with respect to the box body 50. FIGS. 17A to FIG. 17C are perspective views for explaining the rotation of the lid portion 51 with respect to the box body 50. In FIG. 17A to FIG. 17C, a box cover 10 described later is disposed on the storage box 9.

FIG. 16(a) and FIG. 17A are views showing a state in which the lid portion 51 is closed with respect to the box body 50.

As shown in FIG. 16(b) and FIG. 17B, the lid portion 51 is opened by hooking a finger on the recess 72a shown in FIG. 10 and rotating the tip of the lid portion 51 upward around the shaft portion 75.

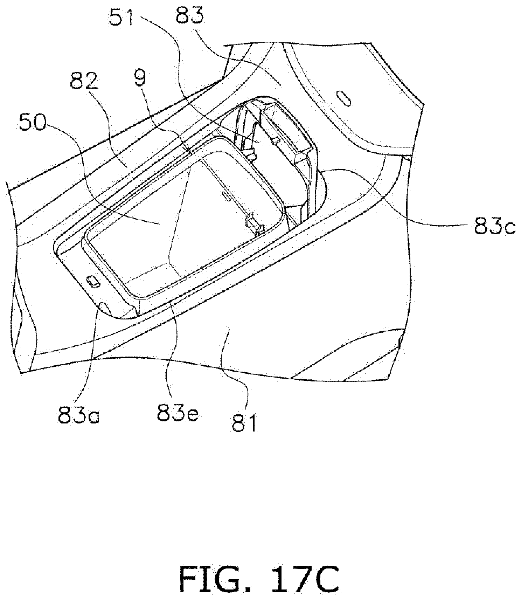

Then, by sliding the shaft 77 downward with respect to the slit 58a (see the arrow H in FIG. 16(b)), the lid portion 51 can be disposed along the rear side surface portion 55 on the rear side of the rear side surface portion 55 of the box body 50 as shown in FIG. 16(c) and FIG. 17C. As shown in FIG. 17B, when a rear edge portion among an edge portion 83e of an opening portion 83a of an upper cover 83, which will be described later, is designated as 83c, the lid portion 51 is inserted along the up-down direction between the edge portion 83c and the box body 50.

When the shaft portion 75 is slid with respect to the slit 58a, as shown in FIG. 16(c), the end portion 78 can pass through the first hole 66c of the first connection flange portion 66b and the second hole 71c of the second connection flange portion 71b.

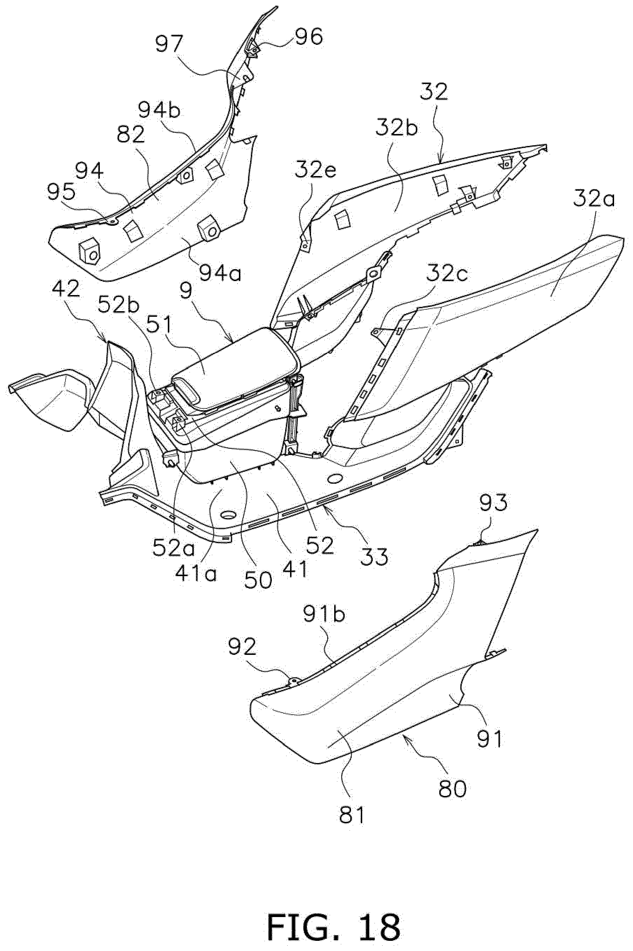

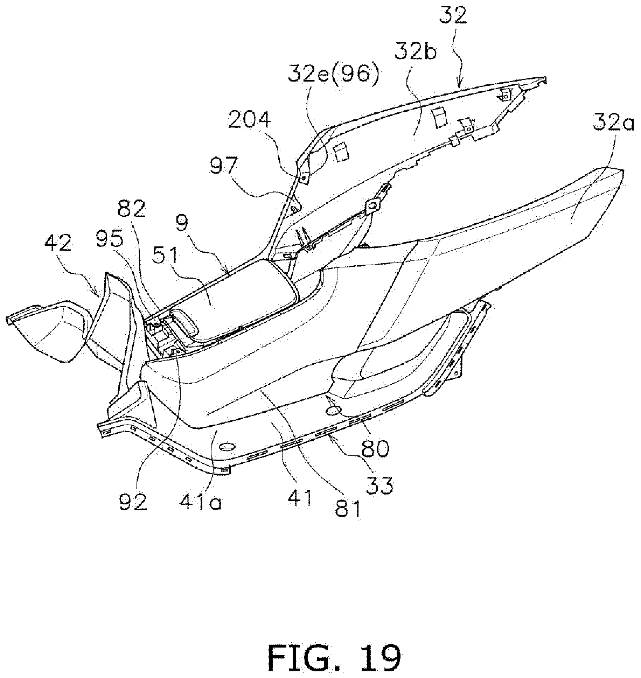

The box cover 10 includes a side cover 80 and an upper cover 83, as shown in FIG. 2. FIG. 18 is a perspective view showing a state in which the side cover 80 is removed from the storage box 9 shown in FIG. 9. FIG. 19 is a perspective view showing a state in which the side cover 80 is attached to the storage box 9.

The side cover 80 covers the side of the storage box 9. The side cover 80 is supported by the storage box 9 and the rear cover 32. The side cover 80 includes a first side cover 81 and a second side cover 82. The first side cover 81 is disposed so as to cover the storage box 9 from the left side. The second side cover 82 is disposed so as to cover the storage box 9 from the right side. The first side cover 81 is disposed above the foot board 33. The second side cover 82 is disposed above the foot board 33.

As shown in FIG. 18, the first side cover 81 includes a cover body 91, a front side attachment portion 92, and a rear side attachment portion 93. The front side attachment portion 92 is disposed inside the cover body 91. The front side attachment portion 92 includes a plate shape. The front side attachment portion 92 is disposed closer to the front side of the cover body 91. The front side attachment portion 92 is disposed on an inner surface 91a (see FIG. 9B) of the cover body 91. The front side attachment portion 92 projects inward from an upper end 91b of the cover body 91. The end 91b is an end on the opening 50a side of the first side cover 81. A through hole is formed in the front side attachment portion 92 in the up-down direction. A bracket portion 52a is disposed on the front portion of the ceiling portion 52 of the storage box 9. A through hole is formed in the bracket portion 52a along the up-down direction. The first side cover 81 can be attached to the storage box 9 by disposing the front side attachment portion 92 on the bracket portion 52a so that two through holes face each other and inserting a screw 203 (see FIG. 9B) into the two through holes.

The rear side attachment portion 93 is disposed inside the cover body 91. The rear side attachment portion 93 includes a plate shape. The rear side attachment portion 93 is disposed closer to the rear side of the cover body 91. The rear side attachment portion 93 projects inward from the inner surface 91a of the cover body 91. A through hole is formed in the rear side attachment portion 93. A through hole is formed in a side cover attachment portion 32c disposed on the inner surface of the first rear cover 32a. The first side cover 81 can be attached to the first rear cover 32a by disposing the rear side attachment portion 93 on the side cover attachment portion 32c so that two through holes face each other, and by inserting a screw into the through holes.

The second side cover 82 includes a cover body 94, a front side attachment portion 95, and a rear side attachment portion 96. The front side attachment portion 95 is disposed inside the cover body 94. The front side attachment portion 95 includes a plate shape. The front side attachment portion 95 is disposed closer to the front side of the cover body 94. The front side attachment portion 95 is disposed on an inner surface 94a of the cover body 94. The front side attachment portion 95 projects inward from an upper end 94b of the cover body 94. The end 94b is an end on the opening 50a side of the second side cover 82.

A through hole is formed in the front side attachment portion 95 in the up-down direction. A bracket portion 52b is disposed on the front portion of the ceiling portion 52 of the storage box 9. The bracket portion 52b is disposed side by side with the bracket portion 52a in the width direction. A through hole is formed in the bracket portion 52b. By disposing the front side attachment portion 95 on the bracket portion 52b so that the through holes face each other and inserting screws 203 (see FIG. 9B) into the two through holes, the second side cover 82 can be attached to the storage box 9.

As shown in FIG. 18, the rear side attachment portion 96 is disposed inside the cover body 94. The rear side attachment portion 96 includes a plate shape. The rear side attachment portion 96 is disposed closer to a rear side of the cover body 94. The rear side attachment portion 96 projects inward from the inner surface of the cover body 94. A through hole is formed in the rear side attachment portion 96. A through hole is formed in a side cover attachment portion 32e disposed on the inner surface of the second rear cover 32b. The second side cover 82 can be attached to the second rear cover 32b by disposing the rear side attachment portion 96 on the side cover attachment portion 32e so that the through holes face each other and inserting screws 204 (see FIG. 19) into the two through holes. In addition, in FIG. 19, since the rear side attachment portion 96 is hidden by the side cover attachment portion 32e, reference numeral is given in parentheses.

As described above, the first side cover 81 is connected to the storage box 9 and the first rear cover 32a, but is not connected to the foot board 33. Further, the second side cover 82 is connected to the storage box 9 and the second rear cover 32b, but is not connected to the foot board 33.

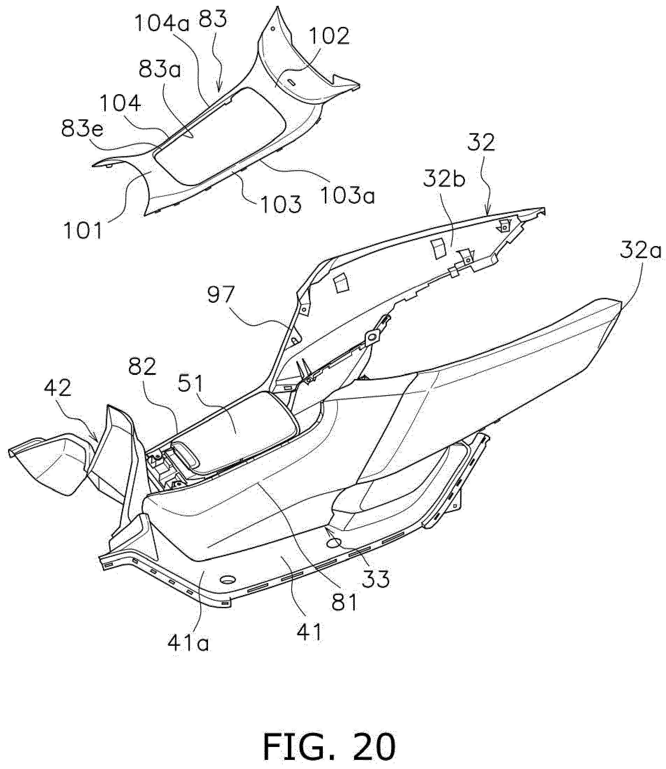

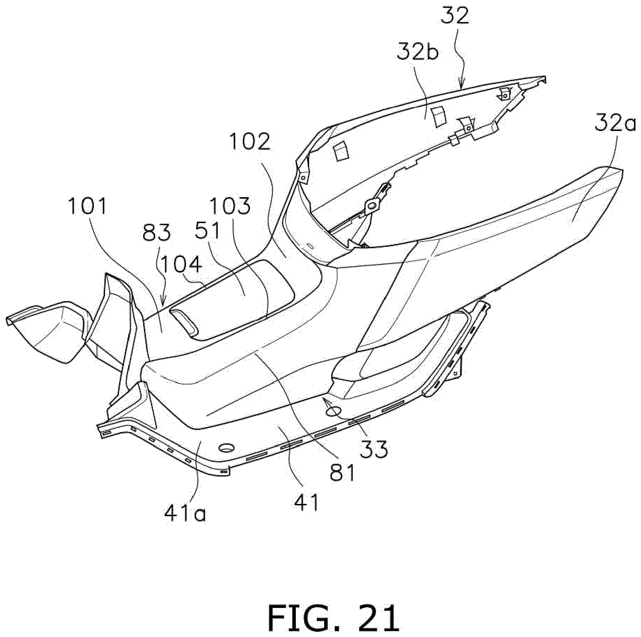

As shown in FIG. 7, the upper cover 83 covers the periphery of the lid portion 51 of the storage box 9 from above. FIG. 20 is a perspective view showing a state in which the upper cover 83 is removed from the storage box 9 and the side cover 80. FIG. 21 is a perspective view showing a state in which the upper cover 83 is attached to the storage box 9 and the side cover 80.

The upper cover 83 is attached to an attachment portion 97 (see FIG. 20) provided on the second side cover 82 and an attachment portion (not shown) provided on the first side cover 81. Screws are inserted into the through holes formed in the attachment portion 97 and the through holes formed in the attachment portion on a lower surface of the upper cover 83, so that the upper cover 83 is connected to the first side cover 81 and the second side cover 82.

As shown in FIG. 20, the upper cover 83 includes an opening portion 83a in which the lid portion 51 is exposed.

The edge portion 83e of the opening portion 83a is bent toward the box body 50 side. The upper cover 83 includes a front portion 101, a rear portion 102, a first side portion 103, and a second side portion 104.

The front portion 101 is disposed on the front side of the opening portion 83a. As shown in FIG. 21, the front portion 101 is disposed on the front side of the lid portion 51 in a state where the upper cover 83 is disposed on the storage box 9. The rear portion 102 is disposed behind the opening portion 83a. As shown in FIG. 21, the rear portion 102 is disposed on the rear side of the lid portion 51 in a state where the upper cover 83 is disposed on the storage box 9. The first side portion 103 is disposed on the left side of the opening portion 83a. As shown in FIG. 21, the first side portion 103 is disposed on the left side of the lid portion 51 in a state where the upper cover 83 is disposed on the storage box 9. The first side portion 103 is disposed between the lid portion 51 and the first side cover 81. In FIG. 20, an end on an opposite side to the opening portion 83a of the first side portion 103 is shown as 103a. The second side portion 104 is disposed on the right side of the opening portion 83a. As shown in FIG. 21, the second side portion 104 is disposed on the right side of the lid portion 51 in a state where the upper cover 83 is disposed on the storage box 9. The second side portion 104 is disposed between the lid portion 51 and the second side cover 82. In FIG. 20, an end on an opposite side to the opening portion 83a of the second side portion 104 is shown as 104a.

As shown in FIG. 14(a), the upper cover 83 covers the end 91b of the first side cover 81 (an end on an opening side of a side cover). The end 91b of the first side cover 81 is disposed closer to the opening 50a than the end 103a of the upper cover 83 (an end on an opposite side to an opening of an upper cover). Further, as shown in FIG. 14(b), the upper cover 83 covers the end 94b of the second side cover 82 (an end on an opening side of a side cover). The end 94b of the second side cover 82 is disposed closer to the opening 50a than the end 104a of the upper cover 83 (an end on an opposite side to an opening of an upper cover). Since the upper cover 83 and the side cover 80 overlap each other in this way, it becomes difficult for water droplets to infiltrate the inside of the upper cover 83 and the side cover 80, and the waterproofness is improved.

In the straddled vehicle 1 according to the present embodiment described above, as shown in FIG. 8, a storage box 9 which is a separate component from the foot board 33 is disposed on the upper surface 41a of the foot board 33. The foot board 33 has sufficient strength to allow a rider's feet to be placed on it, and the storage box 9 is supported from below by the foot board 33 having such strength, so that the storage box 9 can be enlarged to increase the storage capacity. Further, since the storage box 9 is box-shaped and is provided as a separate component from the foot board 33, it is possible to secure the strength of the storage box 9 itself and increase the storage capacity.

Further, in a state where the opening 50a of the box body 50 is closed by the lid portion 51, as shown in FIGS. 14(a) and 14(b), the outer protrusion portion 73 of the lid portion 51 is disposed outside the body side protrusion portion 59. Therefore, the waterproofness can be improved even when water is splashed from above.

Further, as shown in FIG. 11, the box body 50 is divided into the upper portion 60 including the opening 50a and the lower portion 61 disposed below the upper portion 60. As shown in FIG. 8, the joint portion P of the upper portion 60 and the lower portion 61 is formed on the side surface of the box body 50. Therefore, it is difficult for water from the outside to seep in, and the waterproofness can be improved.

Further, as shown in FIG. 10, the front end 51a of the lid portion 51 can rotate in the up-down direction about the axis J which is disposed behind the opening 50a and is disposed along the left-right direction. Therefore, the storage box 9 can be opened and closed by holding the front end 51a of the lid portion 51.

Further, the side cover 80 is supported by the rear cover 32 and the storage box 9 as shown in FIGS. 18 and 19. As a result, it is not necessary to connect the side cover 80 to the foot board 33, so that the components become smaller and assemblability is improved. Since the side cover 80 is provided as a separate component from the storage box 9 and the foot board 33, the degree of freedom in design is increased. Since the side cover 80 covers the side of the storage box 9, it is possible to improve the waterproofness.

Further, as shown in FIGS. 20 and 21, the upper cover 83 covers the storage box 9 from above. Therefore, the waterproofness of the storage box 9 is improved. Since the upper cover 83 is provided as a separate component from the storage box 9 and the foot board 33, the degree of freedom in design is increased.

Further, as shown in FIG. 14(a), the end 91b on the opening 50a side of the first side cover 81 is covered with the upper cover 83, and is disposed closer to the opening 50a than the end 103a on the opposite side to the opening 50a of the upper cover 83. As shown in FIG. 14(b), the end 94b on the opening 50a side of the second side cover 82 is covered with the upper cover 83, and is disposed closer to the opening 50a than the end 104a on the opposite side to the opening 50a of the upper cover 83. Therefore, since the storage box 9 is covered from above and from the side by the side cover 80 and the upper cover 83, the waterproofness is improved. Since the upper cover 83 and the side cover 80 overlap each other, it becomes difficult for water droplets to enter the inside of the covers, and the waterproofness is improved.

As shown in FIG. 8, a fixing portion for fixing the bottom surface of the storage box 9 to the foot board 33 is provided. Therefore, the storage box 9 can be fixed on the foot board 33.

The configuration of the straddled vehicle 1 is not limited to that of the above embodiment, and may be changed. For example, the storage box 9 is fixed to the foot board 33 by bolts, but may be fixed by an adhesive or the like.

Although the slit forming portion 58 is provided to the box body 50, the slit forming portion 58 may not be provided, and the lid portion 51 may only rotate about the axis J.

The foot board 33 is not limited to the shape of the above embodiment, and may be changed. For example, the foot board 33 may include at least a flat portion 41, and may be a separate member from the front inclined portion 42 and the attachment portion.

The box cover 10 is divided into the first side cover 81, the second side cover 82, and the upper cover 83, but the first side cover 81, the second side cover 82 and the upper cover 83 may be integrated.

### INDUSTRIAL APPLICABILITY

According to the present invention, it is possible to increase the storage capacity in a straddled vehicle.

### REFERENCE SIGNS LIST

1: Straddled vehicle, 2: Vehicle body frame, 3: Steering device, 5: Seat, 9: Storage box, 11: Head pipe, 12: Down frame, 13: Lower frame, 14: Seat frame, 25: Battery, 32: Rear cover, 33: Foot board, 41a: Upper surface, 50: Box body, 50a: Opening, 51: Lid portion, 51a: Front end, 59: Body side protrusion portion, 60: Upper portion, 61: Lower portion 73: Outer protrusion portion, 80: Side cover, 83: Upper cover, 91b, 94b: End, 103a, 104a: End, 202: Bolt, J: axis, P: Joint portion

## Claims

1. A straddled vehicle (1) configured to travel with power from a battery (25), the straddled vehicle (1) comprising:
a head pipe (11);
a down frame (12) extending downward from the head pipe (11) in vehicle up-down direction;
a lower frame (13) extending rearward from the down frame (12) in vehicle front-rear direction;
a seat frame (14) extending rearward in vehicle front-rear direction and upward in vehicle up-down direction from the lower frame (13);
a seat (5) disposed behind the head pipe (11) in vehicle front-rear direction, the seat (5) being supported by the seat frame (14); and
a foot board (33) disposed in front of the seat (5) in vehicle front-rear direction and below the seat (5) in vehicle up-down direction, the foot board (33) being disposed above the lower frame (13) in vehicle up-down direction, the foot board (33) including an upper surface (41a) continuous in a vehicle left-right direction, **characterized by** a storage box (9) being a separate component from the foot board (33), the storage box (9) being disposed on the upper surface (41a) of the foot board (33),
the straddled vehicle (1) is further comprising a fixing portion (202) fixing a bottom surface of the storage box (9) to the foot board (33), wherein
the bottom surface of the storage box (9) is fixed to the upper surface (41a) of the foot board (33) by the fixing portion (202) such that the storage box (9) is fixed by its bottom directly on the upper surface (41a) of the foot board (33).

2. The straddled vehicle (1) according to claim 1, **characterized in that** the storage box (9) includes a box body (50) including an opening (50a) on an upper surface, and a lid portion (51) configured to open and close the opening (50a),
the box body (50) includes a body side protrusion portion (59) disposed along an edge of the opening (50a) and projecting toward a lid portion side, and
the lid portion (51) includes a lid side protrusion portion (73) which is disposed along the edge of the opening (50a) and outside the body side protrusion portion (59) when the lid portion (51) closes the opening (50a).

3. The straddled vehicle (1) according to claim 2, **characterized in that** the box body (50) is divided into an upper portion (60) including the opening (50a) and a lower portion (61) disposed below the upper portion (60) in vehicle up-down direction, and a joint portion (P) between the upper portion (60) and the lower portion (61) is formed on a side surface of the box body (50).

4. The straddled vehicle (1) according to claim 2, **characterized in that** a front end (51a) of the lid portion (51) is rotatable in vehicle up-down direction about an axis (J) disposed behind the opening (50a) and disposed along the vehicle left-right direction.

5. The straddled vehicle (1) according to any one of claims 1 to 4, **characterized by**
a rear cover (32) covering the seat frame (14), the rear cover (32) being disposed below the seat (5) in vehicle up-down direction, and
a side cover (80) covering a side of the storage box (9), wherein
the side cover (80) is supported by the rear cover (32) and the storage box (9).

6. The straddled vehicle (1) according to claim 1, **characterized by**
an upper cover (83),
wherein the storage box (9) includes a box body (50) including an opening (50a) on a upper surface, and a lid portion (51) configured to open and close the opening (50a), and
the upper cover (83) covers a periphery of the lid portion (51) of the storage box (9) from above in vehicle up-down direction.

7. The straddled vehicle (1) according to claim 6, **characterized by**
a side cover (80) covering a side of the storage box (9),
wherein, on an outside of the opening (50a) in the left-right direction, an end (91b, 94b) on an opening side of the side cover (80) is covered by the upper cover (83) and is disposed closer to the opening (50a) than an end (103a, 104a) on an opposite side to the opening (50a) of the upper cover (83).

## Patentansprüche

1. Ein Spreiz-Sitz-Fahrzeug (1), das so konfiguriert ist, dass es mit Energie von einer Batterie (25) fährt, das Spreiz-Sitz-Fahrzeug (1) umfasst:
ein Kopfrohr (11);
einen Unter-Rahmen (12), der sich von dem Kopfrohr (11) nach unten in Fahrzeug-Auf-Ab-Richtung erstreckt;
einen unteren Rahmen (13), der sich vom Unter-Rahmen (12) nach hinten in Fahrzeug-Vorder-Rück-Richtung erstreckt;
einen Sitzrahmen (14), der sich vom unteren Rahmen (13) nach hinten in Fahrzeug-Vorder-Rück-Richtung und nach oben in Fahrzeug-Auf-Ab-Richtung erstreckt;
einen Sitz (5), der hinter dem Kopfrohr (11) in Fahrzeug-Vorder-Rück-Richtung angeordnet ist, der Sitz (5) ist von dem Sitzrahmen (14) getragen; und
ein Fußbrett (33), das vor dem Sitz (5) in Fahrzeug-Vorder-Rück-Richtung und unterhalb des Sitzes (5) in Fahrzeug-Auf-Ab-Richtung angeordnet ist, das Fußbrett (33) ist oberhalb des unteren Rahmens (13) in Fahrzeug-Auf-Ab-Richtung angeordnet, das Fußbrett (33) enthält eine obere Fläche (41a), die in einer Fahrzeug-Links-Rechts-Richtung durchgehend ist, **gekennzeichnet durch** einen Staukasten (9), der eine Komponente, getrennt von dem Fußbrett (33) ist, der Staukasten (9) ist auf der oberen Fläche (41a) des Fußbretts (33) angeordnet,
das Spreiz-Sitz-Fahrzeug (1) umfasst weiterhin einen Befestigungsabschnitt (202), der eine Bodenfläche des Staukastens (9) an dem Fußbrett (33) befestigt, wobei die Bodenfläche des Staukastens (9) durch den Befestigungsabschnitt (202) an der oberen Fläche (41a) des Fußbretts (33) befestigt ist, so dass der Staukasten (9) durch seinen Boden direkt auf der oberen Fläche (41a) des Fußbretts (33) befestigt ist.

2. Das Spreiz-Sitz-Fahrzeug (1) gemäß Anspruch 1, **dadurch gekennzeichnet, dass** der Staukasten (9) einen Kastenkörper (50) enthält, der eine Öffnung (50a) auf einer oberen Fläche, und einen Deckelabschnitt (51), der zum Öffnen und Schließen der Öffnung (50a) ausgebildet ist, enthält,
der Kastenkörper (50) enthält einen körperseitigen Vorsprungsabschnitt (59), der entlang einer Kante der Öffnung (50a) angeordnet ist und in Richtung einer Deckelabschnittseite vorsteht, und
der Deckelabschnitt (51) enthält einen deckelseitigen Vorsprungsabschnitt (73), der entlang der Kante der Öffnung (50a) und außerhalb des körperseitigen Vorsprungsabschnitts (59) angeordnet ist, wenn der Deckelabschnitt (51) die Öffnung (50a) verschließt.

3. Das Spreiz-Sitz-Fahrzeug (1) gemäß Anspruch 2, **dadurch gekennzeichnet, dass** der Kastenkörper (50) in einen oberen Abschnitt (60), der die Öffnung (50a) enthält, und einen unteren Abschnitt (61), der in Fahrzeug-Auf-Ab-Richtung unterhalb des oberen Abschnitts (60) angeordnet ist, unterteilt ist, und
ein Verbindungsabschnitt (P) zwischen dem oberen Abschnitt (60) und dem unteren Abschnitt (61) an einer Seitenfläche des Kastenkörpers (50) ausgebildet ist.

4. Das Spreiz-Sitz-Fahrzeug (1) gemäß Anspruch 2, **dadurch gekennzeichnet, dass** ein vorderes Ende (51a) des Deckelabschnitts (51) in Fahrzeug-Auf-Ab-Richtung um eine Achse (J) drehbar ist, die hinter der Öffnung (50a) und entlang der Fahrzeug-Links-Rechts-Richtung angeordnet ist.

5. Das Spreiz-Sitz-Fahrzeug (1) nach einem der Ansprüche 1 bis 4, **gekennzeichnet durch**
eine hintere Abdeckung (32), die den Sitzrahmen (14) abdeckt, die hintere Abdeckung (32) ist in Fahrzeug-Auf-Ab-Richtung unterhalb des Sitzes (5) angeordnet, und
eine seitliche Abdeckung (80), die eine Seite des Staukastens (9) abdeckt, wobei die seitliche Abdeckung (80) durch die hinteren Abdeckung (32) und dem Staukasten (9) gelagert ist.

6. Das Spreiz-Sitz-Fahrzeug (1) gemäß Anspruch 1, **gekennzeichnet durch**
eine obere Abdeckung (83),
wobei der Staukasten (9) einen Kastenkörper (50) mit einer Öffnung (50a) auf einer oberen Fläche und einen Deckelabschnitt (51), der zum Öffnen und Schließen der Öffnung (50a) konfiguriert ist, enthält und
die obere Abdeckung (83) einen Umfang des Deckelabschnitts (51) des Staukastens (9) von oben in Fahrzeug-Auf-Ab-Richtung abdeckt.

7. Das Spreiz-Sitz-Fahrzeug (1) gemäß Anspruch 6, **gekennzeichnet durch**
eine seitliche Abdeckung (80), die eine Seite des Staukastens (9) abdeckt,
wobei auf einer Außenseite der Öffnung (50a) in der Links-Rechts-Richtung, ein Ende (91b, 94b) auf einer Öffnungsseite der seitlichen Abdeckung (80) durch die obere Abdeckung (83) abgedeckt ist und näher an der Öffnung (50a) angeordnet ist als ein Ende (103a, 104a) auf einer gegenüberliegenden Seite der Öffnung (50a) der oberen Abdeckung (83).

## Revendications

1. Véhiculé à enfourcher (1) configuré pour se déplacer avec une énergie issue d'une batterie (25), le véhicule à enfourcher (1) comprenant :
un tube de tête de fourche (11) ;
un élément de cadre descendant (12) s'étendant vers le bas depuis le tube de tête de fourche (11) dans une direction haut-bas du véhicule ;
un élément de cadre inférieur (13) s'étendant vers l'arrière depuis l'élément de cadre descendant (12) dans une direction avant-arrière du véhicule ;
un élément de cadre de siège (14) s'étendant vers l'arrière dans une direction avant-arrière de véhicule et vers le haut dans une direction haut-bas de véhicule depuis l'élément de cadre inférieur (13) ;
un siège (5) disposé derrière le tube de tête de fourche (11) dans une direction avant-arrière de véhicule, le siège (5) étant soutenu par l'élément de cadre de siège (14) ; et
une planche de pied (33) disposée devant le siège (5) dans une direction avant-arrière de véhicule et sous le siège (5) dans une direction haut-bas de véhicule, la planche de pied (33) étant disposée au-dessus de l'élément de cadre inférieur (13) dans une direction haut-bas de véhicule , la planche de pied (33) incluant une surface supérieure (41a) continue dans une direction gauche-droite de véhicule, **caractérisé par** un coffre de stockage (9) constituant un composant séparé de la planche de pied (33), le coffre de stockage (9) étant disposé sur la surface supérieure (41a) de la planche de pied (33),
le véhicule à enfourcher (1) est constitué en outre d'une partie de fixation (202) fixant une surface de fond du coffre de stockage (9) à la planche de pied (33), dans lequel
la surface de fond du coffre de stockage (9) est fixée à la surface supérieure (41a) de la planche de pied (33) par la partie de fixation (202) de sorte que le coffre de stockage (9) soit fixé par son fond directement sur la surface supérieure (41a) de la planche de pied (33).

2. Le véhicule à enfourcher (1) selon la revendication 1, **caractérisé en ce que** le coffre de stockage (9) inclut un corps de coffre (50) incluant une ouverture (50a) sur une surface supérieure, et une partie de couvercle (51) configurée pour ouvrir et fermer l'ouverture (50a),
le corps de coffre (50) inclut une partie de débordement de côté de corps (59) disposée le long d'une arête de l'ouverture (50a) et se projetant vers un côté de partie de couvercle, et
la partie de couvercle (51) inclut une partie de débordement de côté de couvercle (73) qui est disposée le long de l'arête de l'ouverture (50a) et hors de la partie de débordement de côté de corps (59) lorsque la partie de couvercle (51) ferme l'ouverture (50a).

3. Le véhicule à enfourcher (1) selon la revendication 2, **caractérisé en ce que** le corps de coffre (50) est divisé en une partie supérieure (60) incluant l'ouverture (50a) et une partie inférieure (61) disposée sous la partie supérieure (60) dans une direction haut-bas de véhicule, et
une partie jointe (P) entre la partie supérieure (60) et la partie inférieure (61) est constituée sur une surface latérale du corps de coffre (50).

4. Le véhicule à enfourcher (1) selon la revendication 2, **caractérisé en ce que** une extrémité avant (51a) de la partie de couvercle (51) est mobile en rotation dans une direction haut-bas de véhicule autour d'un axe (J) disposé derrière l'ouverture (50a) et disposé le long de la direction gauche-droite de véhicule.

5. Le véhicule à enfourcher (1) selon l'une quelconque des revendications 1 à 4, **caractérisé par** un capot arrière (32) couvrant l'élément de cadre de siège (14), le capot arrière (32) étant disposé sous le siège (5) dans une direction haut-bas de véhicule, et
un capot latéral (80) couvrant un côté du coffre de stockage (9), dans lequel
le capot latéral (80) est soutenu par le capot arrière (32) et le coffre de stockage (9).

6. Le véhicule à enfourcher (1) selon la revendication 1, **caractérisé par**
un capot supérieur (83),
dans lequel le coffre de stockage (9) inclut un corps de coffre (50) incluant une ouverture (50a) sur une surface supérieure, et une partie de couvercle (51) configurée pour ouvrir et fermer l'ouverture (50a), et
le capot supérieur (83) couvre une périphérie de la partie de couvercle (51) du coffre de stockage (9) depuis le dessus dans une direction haut-bas de véhicule.

7. Le véhicule à enfourcher (1) selon la revendication 6, **caractérisé par**
un capot latéral (80) couvrant un côté du coffre de stockage (9),
dans lequel, sur un extérieur de l'ouverture (50a) dans la direction gauche-droite, une extrémité (91b, 94b) sur un côté d'ouverture du capot latéral (80) est couverte par le capot supérieur (83) et
est disposée plus près de l'ouverture (50a) qu'une extrémité (103a, 104a) sur un côté opposé de l'ouverture (50a) du capot supérieur (83).
